# FASCICULE DE BREVET EUROPEEN

(11) **EP 2 485 230 B1**
(45) Date de publication et mention de la délivrance du brevet: **10.06.2015**
(21) Numéro de dépôt: 12150498.9
(22) Date de dépôt: 09.01.2012
(51) Int. Cl.: H01H 9/16

(54) **Dispositif de commutation sans-fil**
Drahtlose Schaltvorrichtung
Wireless switching device

(30) Priorité: 08.02.2011 FR 1150984
(43) Date de publication de la demande: 08.08.2012
(73) Titulaire: Schneider Electric Industries SAS, 92500 Rueil-Malmaison (FR)
(72) Inventeur: Guillot, Alain, 16730 Fleac (FR); Benni, Dominique, 16600 Mornac (FR); Chauvet, Francis, 16440 Mouthiers (FR); Thizon, Patrice, 16600 Ruelle sur Touvre (FR)
(74) Mandataire: Bié, Nicolas

(56) Documents cités:
- EP-A1- 1 607 993
- EP-A2- 1 625 984
- FR-A1- 2 826 160
- US-A1- 2002 190 610

## Description

La présente invention se rapporte à un dispositif de commutation sans-fil, plus précisément à un dispositif de commutation sans-fil par exemple de type bouton-poussoir ou interrupteur de position.

Dans un bouton-poussoir, la commutation est réalisée par une action humaine directe alors que pour un interrupteur de position, la commutation provient en règle générale d'une action mécanique externe telle que par exemple le mouvement d'une porte ou la traction d'un câble.

Le développement des technologies sans-fil dans tous les domaines techniques a entraîné l'apparition de nouvelles contraintes, notamment dans le domaine de la boutonnerie industrielle ou dans celui des interrupteurs de position. Dans un dispositif de commutation de ce type, un module de communication sans-fil occupe un espace non négligeable car il comporte une carte électronique, une antenne et une source d'énergie, cette source d'énergie pouvant être une batterie ou un générateur d'énergie électrique apte à convertir une énergie mécanique en énergie électrique. Or il est nécessaire de se conformer à des exigences de compacité, notamment pour permettre à un utilisateur de remplacer son dispositif de commutation actuel en version câblée par un nouveau dispositif de commutation fonctionnant par technologie sans-fil.

Il est connu du document EP1625984 un dispositif de commutation. Ce dispositif de commutation comporte un actionneur et un lecteur doté d'une antenne, l'actionneur étant commandé si un code émis par un transpondeur situé à portée du lecteur correspond à un code mémorisé.

Les documents Fr2826160, US2002/190610 et EP1607993 décrivent des dispositifs de commutation sans-fil.

Le but de l'invention est donc de proposer un dispositif de commutation sans-fil qui soit fiable et qui présente une architecture particulièrement compacte.

Ce but est atteint par un dispositif de commutation sans-fil comportant :
- un organe d'actionnement mobile suivant un axe principal entre une position de repos et une position de travail,
- un ressort sollicité à l'effort par l'organe d'actionnement selon une direction sensiblement parallèle à l'axe principal,
- un ensemble de commutation comportant un boîtier, un poussoir agencé pour être actionné par l'organe d'actionnement et un module émetteur sans-fil doté d'une antenne permettant d'envoyer un message à un module récepteur lors d'une action sur le poussoir,
- le boîtier comporte une proéminence formant un logement,
- l'antenne étant agencée à l'intérieur du logement,
- l'organe d'actionnement comportant une partie formant un espace interne axial creux à l'intérieur duquel vient se loger ladite proéminence logeant l'antenne.

Selon une particularité du dispositif de l'invention, le ressort est agencé de manière coaxiale à l'organe d'actionnement.

Dans un dispositif de commutation de type bouton-poussoir, le ressort est agencé à l'extérieur de la partie de l'organe d'actionnement formant l'espace interne. Un dispositif de commutation de type bouton-poussoir comporte un ensemble de commande doté de l'organe d'actionnement et une embase de fixation fixée sur l'ensemble de commande et destinée à accueillir l'ensemble de commutation. L'ensemble de commande comporte un corps dans lequel l'organe d'actionnement est entraîné en translation et le ressort est positionné en appui d'une part contre le corps et d'autre part contre l'organe d'actionnement.

Typiquement, un dispositif de commutation de type bouton-poussoir est assemblé à travers une ouverture réalisée dans une paroi, l'ensemble de commande et l'ensemble de commutation étant assemblés de part et d'autre de la paroi, l'antenne étant agencée pour traverser le plan formé par la paroi de manière à dépasser d'un côté ou de l'autre de la paroi.

Dans un dispositif de commutation de type interrupteur de position, le ressort est agencé à l'intérieur de la partie de l'organe d'actionnement formant l'espace interne. Ce dispositif comporte un boîtier étanche renfermant l'organe d'actionnement et l'ensemble de commutation. Préférentiellement, le ressort est en appui d'une part contre l'ensemble de commutation et d'autre part contre l'organe d'actionnement.

Dans un dispositif de commutation de type interrupteur de position, le ressort peut être agencé à l'extérieur de la partie de l'organe d'actionnement formant l'espace interne. Il comporte également un boîtier étanche renfermant l'organe d'actionnement et l'ensemble de commutation. Dans cette configuration, l'ensemble de commutation est par exemple agencé dans le boîtier de manière à pouvoir coulisser avec le boîtier par rapport à l'organe d'actionnement.

Selon l'invention, l'ensemble de commutation est monobloc et comporte un boîtier renfermant un générateur d'énergie électrique apte à coopérer avec le poussoir et permettant de convertir une énergie mécanique fournie par le poussoir en une énergie électrique destinée à alimenter le module émetteur sans-fil. Le générateur d'énergie électrique est par exemple de type électromagnétique et comporte un circuit magnétique doté d'une partie fixe et d'une partie mobile et une bobine électromagnétique traversée par le circuit magnétique.

D'autres caractéristiques et avantages vont apparaître dans la description détaillée qui suit en se référant à un mode de réalisation donné à titre d'exemple et représenté par les dessins annexés sur lesquels :
- la figure 1 représente un dispositif de commutation de type bouton-poussoir conforme à l'invention,
- la figure 2 représente, en vue semi-ouverte, le dispositif de commutation de la figure 1,
- la figure 3 représente, vu en éclaté, un dispositif de commutation de type interrupteur de position conforme à l'invention,
- la figure 4 représente, vu en coupe longitudinale axiale, le dispositif de commutation de la figure 3,
- la figure 5 représente, vu en éclaté, un dispositif de commutation de type interrupteur de position conforme à l'invention,
- les figures 6 et 7 représentent, vu selon deux coupes longitudinales axiales, le dispositif de commutation de la figure 5,
- la figure 8 représente un ensemble de commutation employé dans le dispositif de commutation de l'invention,
- la figure 9 représente, vu en coupe, l'ensemble de commutation montré sur la figure 8,
- la figure 10 représente, vu en éclaté, l'ensemble de commutation montré sur les figures 8 et 9,
- la figure 11 représente, vu en éclaté, le générateur d'énergie employé dans l'invention,
- les figures 12A et 12B montrent les deux positions de fonctionnement du générateur d'énergie représenté en figure 11.

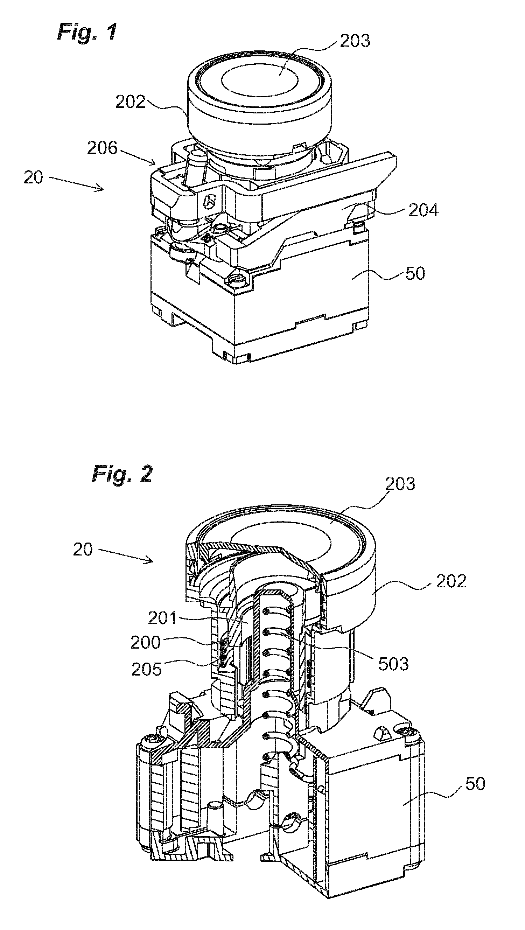

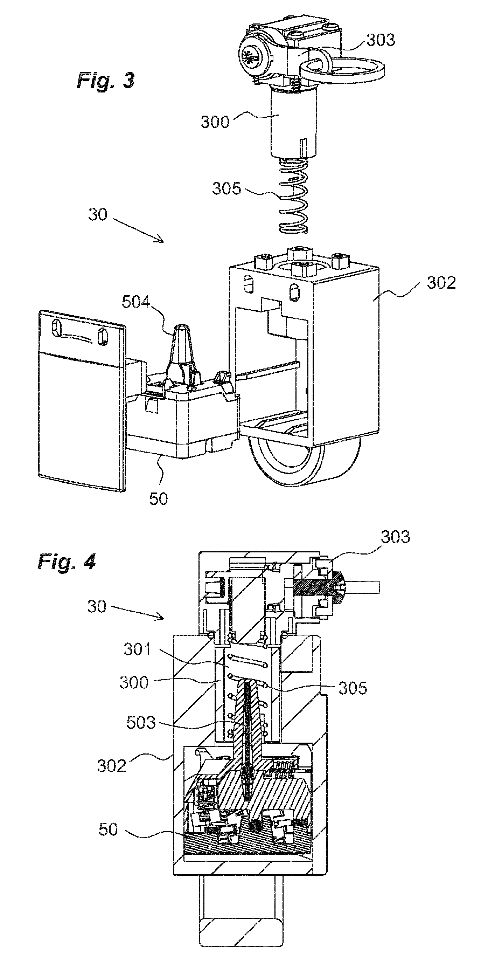

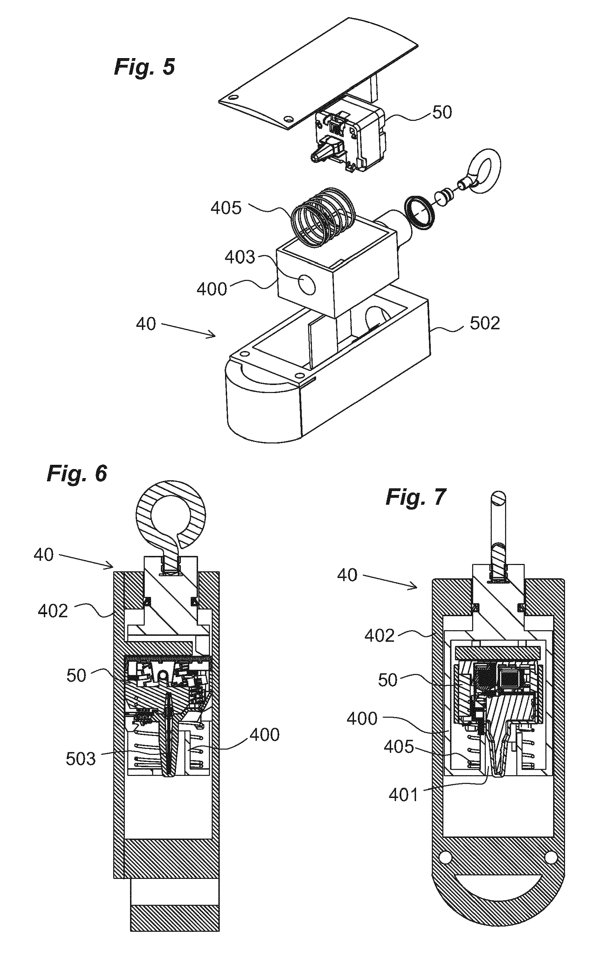

L'invention concerne un dispositif de commutation par exemple de type bouton-poussoir 20 comme représenté sur les figures 1 et 2 ou interrupteur de position 30, 40 comme représenté sur les figures 3 à 7. Sur les figures 3 à 7, on peut distinguer deux types d'interrupteur de position, l'un fonctionnant à l'aide d'un levier pivotant (figures 3 et 4), l'autre à fonctionnement axial (figures 5 à 7).

Le dispositif de commutation de l'invention présente la particularité d'être à communication sans-fil lui permettant d'envoyer un message à un module récepteur distant à travers un réseau de communication sans-fil. Le dispositif de commutation comporte dans toutes ses réalisations un organe d'actionnement 200, 300, 400 dont l'activation permet d'actionner un ensemble de commutation 50 dédié à l'envoi d'un message vers un module récepteur distant.

Dans un dispositif de commutation de type bouton-poussoir 20, un ensemble de commande comportant l'organe d'actionnement est par exemple séparable de l'ensemble de commutation 50. Dans un dispositif de commutation de type interrupteur de position, l'ensemble de commande et l'ensemble de commutation 50 sont par exemple réunis à l'intérieur d'un même boîtier principal.

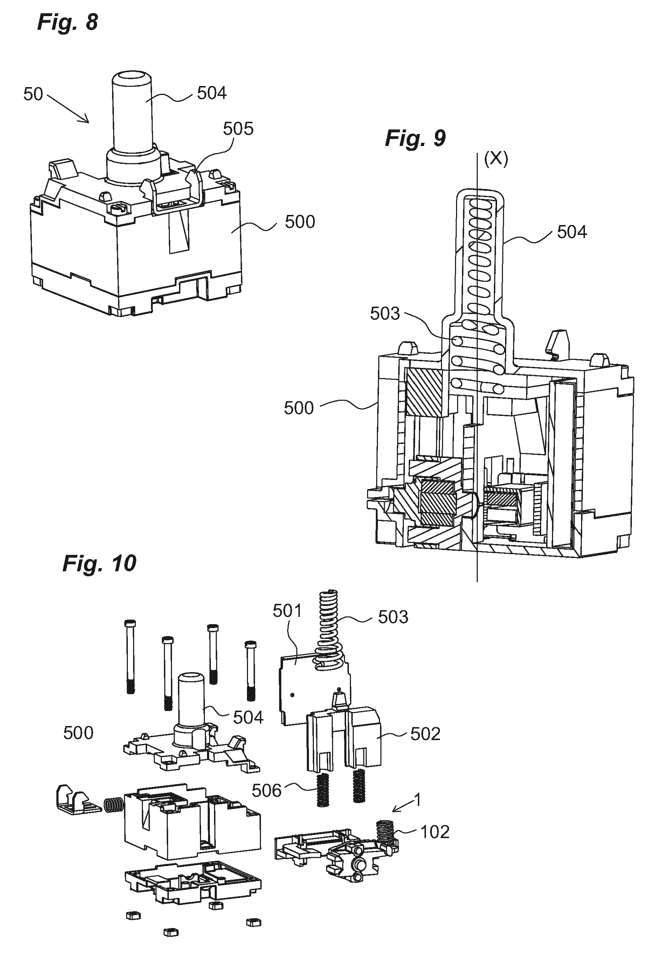

En référence aux figures 8 à 10, l'ensemble de commutation 50 du dispositif comporte un boîtier 500, par exemple en trois parties, renfermant au moins une unité électronique 501 dotée d'un module émetteur sans-fil et une source d'énergie destinée à alimenter le module émetteur sans-fil. Cette source d'énergie peut être une batterie, une pile ou un générateur 1 d'énergie électrique permettant de convertir une énergie mécanique en énergie électrique. Préférentiellement l'ensemble de commutation 50 comporte un tel générateur d'énergie électrique permettant de rendre le dispositif de commutation sans-fil parfaitement autonome. Dans la suite de la description, nous nous intéresserons plus particulièrement à un ensemble de commutation 50 doté d'un tel générateur 1 d'énergie électrique.

Selon l'invention, le générateur 1 d'énergie électrique logé dans le boîtier 500 est par exemple de type à induction électromagnétique ou de type piézoélectrique, et permet donc de convertir une énergie mécanique en une énergie électrique destinée à l'alimentation de l'unité électronique 501. Dans le dispositif de l'invention, l'énergie mécanique est fournie par le mouvement d'un poussoir 502 coopérant avec l'organe d'actionnement 200, 300, 400 du dispositif de commutation.

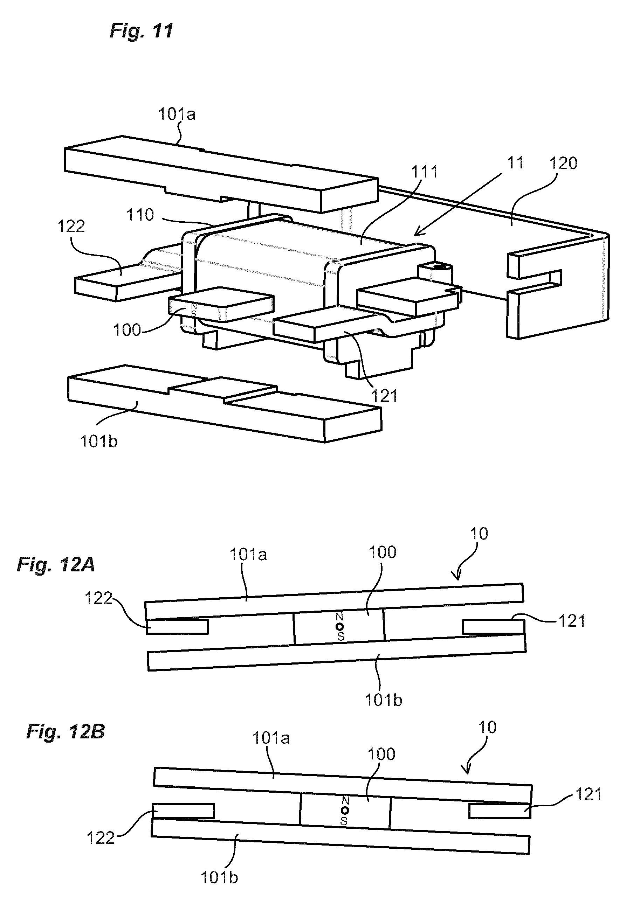

Un générateur 1 d'énergie à induction électromagnétique est représenté en figure 11. Il permet de générer un courant électrique dans une bobine d'excitation 11 en faisant varier le flux magnétique traversant la bobine 11 par une action mécanique externe.

En référence à la figure 11, le générateur 1 comporte notamment ladite bobine d'excitation 11 et un circuit magnétique à travers lequel peut circuler un champ magnétique, ledit circuit magnétique étant formé d'une partie fixe et d'une partie mobile 10.

Le flux magnétique dans le circuit magnétique est défini par la position angulaire instantanée de la partie mobile 10 par rapport à la partie fixe de sorte que le mouvement de la partie mobile 10 par rapport à la partie fixe crée une variation du flux magnétique à travers la bobine 11 ce qui entraîne la création d'un courant électrique dans la bobine 11. La tension créée aux bornes de la bobine 11 par la variation du flux magnétique dépend du temps et donc de la vitesse de déplacement de la partie mobile 10 par rapport à la partie fixe.

La bobine d'excitation 11 comporte une armature 110 réalisée dans un matériau isolant, sur laquelle est enroulé un bobinage 111 de n spires d'un fil conducteur. L'armature 110 présente une ouverture centrale formée suivant un axe longitudinal et dont les dimensions sont adaptées pour pouvoir être traversée plusieurs fois par le circuit magnétique. Sur la figure 11, la partie fixe du circuit magnétique traverse deux fois l'ouverture centrale de la bobine 11 en formant une boucle. Le circuit magnétique traverse donc une première fois l'ouverture centrale de la bobine 11, puis contourne la bobine 11 pour former la boucle, et traverse une seconde fois l'ouverture centrale de la bobine 11.

La partie mobile 10 du circuit magnétique présente par exemple une forme en H comportant par exemple un aimant permanent 100 pris entre deux couches 101 a, 101 b parallèles en matériau ferromagnétique, une couche supérieure 101 a et une couche inférieure 101 b. Cette partie mobile 10 est montée rotative sur un axe de rotation horizontal perpendiculaire à l'axe longitudinal de l'ouverture centrale de l'armature 110. Un ressort 102 est agencé pour permettre à la partie mobile 10 de revenir à sa position initiale après actionnement.

La partie fixe du circuit magnétique est réalisée dans un matériau de forte perméabilité magnétique tel qu'un matériau ferromagnétique. En référence à la figure 11, la partie fixe comporte une embase 120 en forme de U enjambant la bobine d'excitation 11. La partie fixe du circuit magnétique comporte également un premier bras 121 et un second bras 122 distincts, non jointifs et non identiques, l'un des bras étant le reflet de l'autre dans un miroir. Le premier bras 121 est relié à la première extrémité de l'embase 120 tandis que le second bras 122 est relié à la seconde extrémité de l'embase 120. Ces deux bras 121, 122 sont en forme de L et traversent distinctement l'ouverture centrale de l'armature 110 suivant deux plans parallèles à l'axe longitudinal de l'ouverture centrale de la bobine 11. Les deuxièmes extrémités de chacun des bras 121, 122 sont positionnées de part et d'autre de l'aimant permanent 100 de la partie mobile 10 et entre les deux couches ferromagnétiques 101 a, 101 b de la partie mobile 10. Chaque bras 121, 122 forme une butée pour la partie mobile 10 et définit deux plages d'appui opposées, une plage d'appui supérieure et une plage d'appui inférieure. La partie mobile 10 présente un degré de liberté en rotation entre les butées formées par chacun des bras 121, 122.

Comme l'embase 120 est agencée pour être positionnée de part et d'autre de la bobine 11, le champ magnétique circulant dans les bras 121, 122 traverse toujours l'ouverture centrale de la bobine 11 dans le même sens. En conséquence, le champ magnétique traverse l'ouverture centrale de la bobine d'excitation 11 deux fois dans le même sens.

En référence aux figures 12A et 12B, on peut voir que la partie mobile 10 effectue un mouvement de balancier autour de son axe et peut prendre deux positions extrêmes distinctes définies par les butées, dans chacune desquelles la partie mobile 10 est retenue par des forces magnétiques. Lorsque la partie mobile 10 est décollée de l'une de ses positions extrêmes et déplacée au-delà d'une position d'équilibre centrale, elle est instantanément attirée par effet magnétique vers l'autre position extrême. Ce phénomène est notamment décrit dans la demande de brevet antérieure GB 1 312 927.

Selon l'invention, le générateur 1 d'énergie est logé dans le boîtier 500 et coopère mécaniquement avec l'organe d'actionnement 200, 300, 400 via un poussoir 502 mobile actionnable en translation par l'organe d'actionnement. Ce poussoir 502 est logé dans le boîtier 500 et permet de convertir le mouvement de l'organe d'actionnement entre ses deux positions en un mouvement de la partie mobile 10 du générateur 1 entre ses deux positions.

Le passage de la partie mobile 10 du générateur 1 d'une première position à une deuxième position permet de générer une première quantité d'énergie sous la forme d'une première tension exploitable en aval par l'unité électronique 501. Selon l'électronique implantée dans l'unité électronique 501, il est également possible de générer une deuxième quantité d'énergie, sous la forme d'une deuxième tension, lors du passage de la partie mobile 10 du générateur 1 de sa deuxième position à sa première position. La première quantité d'énergie et la deuxième quantité d'énergie générées lors d'un aller et retour de la partie mobile 10 du générateur 1 peuvent chacune être employées par l'unité électronique 501 pour l'envoi d'un message distinct. Lorsque la partie mobile 10 du générateur 1 effectue un aller et un retour, les deux tensions générées sont en effet de signes opposés, la première tension étant par exemple positive et la deuxième tension négative, ce qui permet à l'unité électronique de distinguer s'il s'agit d'un enfoncement ou d'un relâchement de l'organe d'actionnement 200, 300, 400 et d'envoyer deux messages différents pour chacune des actions. A l'aller, la partie mobile 10 du générateur est mise en mouvement par une pression sur l'organe d'actionnement, et au retour, la partie mobile 10 revient vers sa position initiale sous l'action du ressort 102.

L'organe d'actionnement 200, 300, 400 se déplace suivant un axe principal (A) et peut prendre deux positions distinctes, une position de repos dans laquelle un ressort de rappel 205, 305, 405, par exemple de type hélicoïdal, est relâché et une position de travail dans laquelle le ressort de rappel est comprimé. La position de repos de l'organe d'actionnement correspond par exemple à la première position de la partie mobile du générateur 1 d'énergie et la position de travail à la deuxième position de la partie mobile du générateur 1 d'énergie.

En outre, l'unité électronique 501 comporte un dispositif d'accumulation de l'énergie électrique générée par le générateur 1 et le module émetteur sans-fil comporte une antenne 503. Le module émetteur sans-fil est par exemple de type radiofréquence et est alimenté par le courant produit par le générateur 1 via le dispositif d'accumulation d'énergie. A l'aide de l'antenne 503, il permet d'envoyer un message vers un module récepteur distant (non représenté) qui comporte une antenne correspondante lui permettant de recevoir le message. Le protocole de communication sans-fil utilisé entre le module émetteur sans-fil et le module récepteur sera par exemple ZIGBEE. En variante de réalisation, le module émetteur peut être de type infrarouge. Le message pourra comporter plusieurs trames successives identiques et comportera notamment un identifiant unique du dispositif de commutation permettant au module récepteur d'identifier le dispositif qui a été actionné. Le module récepteur comportera par exemple une table répertoriant tous les dispositifs avec lesquels il est apparié et l'état de chacun de ces dispositifs.

Selon l'invention, le boîtier 500 de l'ensemble de commutation 50 comporte un logement formant une proéminence 504 allongée sur le boîtier et dans lequel vient se loger l'antenne 503. Comme représenté sur les figures 4 et 6, l'antenne 503 est par exemple réalisée sous la forme d'une piste électrique sur un circuit imprimé. Comme représenté sur les figures 2, 9 et 10, l'antenne 503 peut également prendre la forme d'un ressort venant se loger dans le logement réalisé dans le boîtier, ou toute autre forme adaptée pour venir se loger dans le logement prévu. Des moyens de fixation 505 peuvent être employés pour fixer l'ensemble de commutation 50 sur des moyens complémentaires.

Selon l'invention, le poussoir 502 de l'ensemble de commutation est positionné à proximité de la base de l'antenne 503, et son déplacement se réalise parallèlement à l'axe (X) de l'antenne 503. Ce poussoir 502 est monté sur deux ressorts 506 montés axialement dans l'ensemble de commutation 50.

Selon l'invention, l'organe d'actionnement 200, 300, 400 du dispositif de commutation comporte par exemple une partie, par exemple de forme générale cylindrique, ayant une face ouverte débouchant sur un espace 201, 301, 401 interne axial creux de l'organe d'actionnement. Selon l'invention, l'ensemble de commutation 50 est agencé dans le dispositif de commutation de manière à ce que la proéminence 504 logeant l'antenne 503 et réalisée sur le boîtier 500 de l'ensemble de commutation vienne s'insérer suivant l'axe principal (A) dans l'espace 201, 301, 401 interne creux de l'organe d'actionnement 200, 300, 400. De cette manière, le dispositif de commutation se trouve être particulièrement compact. Cet agencement particulier est commun à tous les dispositifs de commutation de l'invention, qu'ils soient de type bouton-poussoir ou interrupteur de position.

Par ailleurs, un dispositif de commutation de type bouton-poussoir est destiné à être fixé à travers une ouverture circulaire de diamètre normalisé formée sur une paroi métallique, telle que par exemple la porte d'une armoire électrique. L'ensemble de commande comportant l'organe d'actionnement 200 et l'ensemble de commutation 50 sont destinés à être fixés de part et d'autre de cette paroi. L'agencement de l'antenne 503 à l'intérieur de l'espace 201 interne formé dans l'organe d'actionnement 200 permet à l'antenne 503 de traverser le plan formé par la paroi. Grâce à cet agencement, le dispositif peut ainsi émettre des deux côtés de la paroi, c'est-à-dire vers l'extérieur ou vers l'intérieur de l'armoire si la paroi est la porte d'une armoire électrique. Plus précisément, sur les figures 1 et 2, l'ensemble de commande du dispositif de commutation de type bouton-poussoir comporte un corps 202 de forme générale cylindrique, un bouton de commande 203 agencé dans ledit corps et relié mécaniquement à l'organe d'actionnement 200 pour l'entraîner en translation dans le corps 202. Le dispositif de commutation de type bouton-poussoir comporte également l'embase 204 (représentée seulement sur la figure 1) fixée d'une part au corps 202 de l'ensemble de commande et comportant des moyens de réception permettant d'accueillir l'ensemble de commutation 50 par ses moyens de fixation 505. Cette embase 204 est située du même côté de la paroi que l'ensemble de commutation 50 et présente une ouverture centrale permettant de laisser passer l'antenne 503 de l'ensemble de commutation 50 jusqu'à l'espace interne 201 de l'organe d'actionnement 200. L'ensemble de commande comporte également un ressort de rappel 205 de type hélicoïdal positionné de manière coaxiale à la partie cylindrique de l'organe d'actionnement 200, à l'extérieur de celui-ci, en appui d'une part contre une partie interne du corps 202 de l'ensemble de commande et d'autre part contre l'organe d'actionnement 200. Ce ressort 205 étant nécessaire pour le fonctionnement du dispositif, son emplacement ne pouvait être qu'à l'extérieur de l'organe d'actionnement 200, l'espace 201 interne étant occupé par l'antenne 503. Le dispositif de commutation comporte également un dispositif de fixation 206 permettant de fixer le bouton-poussoir sur une paroi. Un tel dispositif de fixation est décrit précisément dans le brevet publié EP0889564 ou son correspondant US6050528. D'autres solutions de fixation peuvent bien entendu être envisagées pour le dispositif de commutation de l'invention. Lorsque l'ensemble de commutation est fixé grâce à l'embase sur l'ensemble de commande, l'organe d'actionnement 200 est destiné à coopérer avec le poussoir 502 de l'ensemble de commutation 50 en vue de l'entraîner en translation vers l'intérieur de l'ensemble de commutation.

Sur les figures 3 à 7, le dispositif de commutation de type interrupteur de position comporte, dans ses deux types de réalisation, un boîtier 302, 402, par exemple étanche, renfermant l'ensemble de commutation 50 et l'organe d'actionnement 300, 400. Les dispositifs de type interrupteur de position n'étant pas confinés dans des armoires, ceux-ci doivent présenter un bon indice d'étanchéité pour supporter les agressions extérieures. L'emploi d'un ensemble de commutation autoalimenté permet de renforcer l'étanchéité du dispositif puisqu'aucun câble n'est nécessaire. L'emploi d'un générateur d'énergie électrique permet de plus d'éviter toute opération de maintenance telle que le remplacement d'une pile ou d'une batterie usagée et donc d'éviter toute ouverture du boîtier susceptible de violer l'étanchéité du dispositif. Le dispositif de commutation comporte en outre un ressort de rappel 305, 405 de type hélicoïdal positionné de manière coaxiale à la partie cylindrique de l'organe d'actionnement 300, 400 et en appui d'une part contre l'ensemble de commutation 50 et d'autre part contre l'organe d'actionnement 300, 400. Dans l'interrupteur de position à levier pivotant, le ressort de rappel 305 est situé à l'intérieur de la partie cylindrique de l'organe d'actionnement 300. Dans l'interrupteur de position à fonctionnement axial, le ressort de rappel 405 est positionné à l'extérieur de la partie cylindrique de l'organe d'actionnement 400. Dans l'interrupteur de position à levier pivotant, l'actionnement du poussoir 502 de l'ensemble de commutation 50 est par exemple réalisé par déplacement de l'organe d'actionnement et dans l'interrupteur de position à fonctionnement axial, l'actionnement du poussoir 502 est réalisé par déplacement du boîtier 402.

Dans l'interrupteur de position à levier pivotant, l'organe d'actionnement 300 est actionné en translation par une came solidaire en rotation d'une tête de commande 303 pivotante. Dans l'interrupteur de position à fonctionnement axial, l'organe d'actionnement 400 est fixe et le boîtier 402 solidaire en translation de l'ensemble de commutation 50 est mobile en translation par rapport à l'organe d'actionnement 400. Dans cette dernière configuration, l'organe d'actionnement 400 a par exemple la forme d'un cadre positionné à l'intérieur du boîtier 402 et à l'intérieur duquel est positionné l'ensemble de commutation 50. Le boîtier 402 comporte des moyens pour entraîner l'ensemble de commutation 50 en translation contre l'organe d'actionnement 400. Une ouverture 403 axiale réalisée sur l'organe d'actionnement 400 permet de laisser passer la proéminence 504 de l'ensemble de commutation 50 lors de l'actionnement du dispositif. Avec cet agencement, le boîtier 402 pourra par exemple prendre la forme d'une poignée ergonomique.

La configuration d'un interrupteur de position en mode sans-fil permet de s'abstenir de tout câblage, et ainsi de pouvoir agencer le dispositif dans plusieurs types de configuration, par exemple en le suspendant à un simple fil ou câble.

Le dispositif de commutation de l'invention permet ainsi de proposer une solution sans-fil et parfaitement autonome, sans détériorer la compacité d'un tel dispositif. L'agencement de l'antenne à l'intérieur de l'organe d'actionnement 200, 300, 400 et du ressort de rappel 205, 305, 405 permet notamment de remplir cet objectif de compacité sans altérer ses performances, notamment en termes de transmission radio.

Il est bien entendu que l'on peut, sans sortir du cadre de l'invention, imaginer d'autres variantes et perfectionnements de détail et de même envisager l'emploi de moyens équivalents.

## Revendications

1. Dispositif de commutation sans-fil comportant :
- un organe d'actionnement (200, 300, 400) mobile suivant un axe principal (A) entre une position de repos et une position de travail,
- un ressort (205, 305, 405) sollicité à l'effort par l'organe d'actionnement selon une direction parallèle à l'axe principal,
- un ensemble de commutation (50) comportant un boîtier (500), un poussoir (502) agencé pour être actionné par l'organe d'actionnement (200, 300, 400) et un module émetteur sans-fil doté d'une antenne (503) permettant d'envoyer un message à un module récepteur lors d'une action sur le poussoir,
**caractérisé en ce que** :
- le boîtier comporte une proéminence (504) formant un logement,
- l'antenne (503) est agencée à l'intérieur du logement,
- l'organe d'actionnement comporte une partie formant un espace (201, 301, 401) interne axial creux à l'intérieur duquel vient se loger ladite proéminence (504) logeant l'antenne (503).

2. Dispositif selon la revendication 1, **caractérisé en ce que** le ressort (205, 305, 405) est agencé de manière coaxiale à l'organe d'actionnement (200, 300, 400).

3. Dispositif selon la revendication 2, **caractérisé en ce que** le ressort (205) est agencé à l'extérieur de la partie de l'organe d'actionnement (200) formant l'espace (201) interne.

4. Dispositif selon la revendication 3, **caractérisé en ce qu'**il comporte un ensemble de commande comportant l'organe d'actionnement (200) et une embase de fixation (204) fixée sur l'ensemble de commande et destinée à accueillir l'ensemble de commutation (50).

5. Dispositif selon la revendication 4, **caractérisé en ce que** l'ensemble de commande comporte un corps (202) dans lequel l'organe d'actionnement (200) est entraîné en translation et **en ce que** le ressort (205) est positionné en appui d'une part contre le corps (202) et d'autre part contre l'organe d'actionnement (200).

6. Dispositif selon la revendication 4 ou 5, **caractérisé en ce qu'**il est assemblé à travers une ouverture réalisée dans une paroi et **en ce que** l'ensemble de commande et l'ensemble de commutation sont assemblés de part et d'autre de la paroi, l'antenne (503) étant agencée pour traverser le plan formé par la paroi.

7. Dispositif selon la revendication 2, **caractérisé en ce que** le ressort (305) est agencé à l'intérieur de la partie de l'organe d'actionnement (300) formant l'espace (301) interne.

8. Dispositif selon la revendication 7, **caractérisé en ce qu'**il comporte un boîtier (302) étanche renfermant l'organe d'actionnement (300) et l'ensemble de commutation (50).

9. Dispositif selon la revendication 7 ou 8, **caractérisé en ce que** le ressort (305) est en appui d'une part contre l'ensemble de commutation (50) et d'autre part contre l'organe d'actionnement (300).

10. Dispositif selon la revendication 2, **caractérisé en ce que** le ressort (405) est agencé à l'extérieur de la partie de l'organe d'actionnement (400) formant l'espace (401) interne.

11. Dispositif selon la revendication 10, **caractérisé en ce qu'**il comporte un boîtier (402) étanche renfermant l'organe d'actionnement (400) et l'ensemble de commutation (50).

12. Dispositif selon la revendication 11, **caractérisé en ce que** l'ensemble de commutation (50) est agencé dans le boîtier (402) de manière à pouvoir coulisser avec le boîtier (402) par rapport à l'organe d'actionnement (400).

13. Dispositif selon l'une des revendications 1 à 12, **caractérisé en ce que** l'ensemble de commutation (50) comporte un boîtier (500) renfermant un générateur (1) d'énergie électrique apte à coopérer avec le poussoir (502) et permettant de convertir une énergie mécanique fournie par le poussoir en une énergie électrique destinée à alimenter le module émetteur sans-fil.

14. Dispositif selon la revendication 13, **caractérisé en ce que** le générateur (1) d'énergie électrique est de type électromagnétique et comporte un circuit magnétique doté d'une partie fixe et d'une partie mobile (10) et une bobine (11) électromagnétique traversée par le circuit magnétique.

## Patentansprüche

1. Drahtlose Schaltvorrichtung, umfassend:
- ein Betätigungselement (200, 300, 400), das entlang einer Hauptachse (A) zwischen einer Ruheposition und einer Betriebsposition beweglich ist,
- eine Feder (205, 305, 405), die durch das Betätigungselement in einer Richtung parallel zur Hauptachse belastet wird,
- eine Schalteinheit (50), umfassend ein Gehäuse (500), einen Drücker (502), der dazu vorgesehen ist, vom Betätigungselement (200, 300, 400) betätigt zu werden, und ein drahtloses Sendemodul, das mit einer Antenne (503) versehen ist, die es ermöglicht, eine Meldung an ein Empfangsmodul bei Betätigung des Drückers zu senden,
**dadurch gekennzeichnet, dass**:
- das Gehäuse einen Vorsprung (504) umfasst, der eine Lagerung bildet,
- die Antenne (503) im Inneren der Lagerung angeordnet ist,
- das Betätigungselement einen Teil umfasst, der einen hohlen axialen Innenraum (201, 301, 401) bildet, in dem der Vorsprung (504), der die Antenne (503) aufnimmt, gelagert ist.

2. Vorrichtung nach Anspruch 1, **dadurch gekennzeichnet, dass** die Feder (205, 305, 405) koaxial zum Betätigungselement (200, 300, 400) angeordnet ist.

3. Vorrichtung nach Anspruch 2, **dadurch gekennzeichnet, dass** die Feder (205) außerhalb des Teils des Betätigungselements (200), der den Innenraum (201) bildet, angeordnet ist.

4. Vorrichtung nach Anspruch 3, **dadurch gekennzeichnet, dass** sie eine Steuereinheit besitzt, umfassend das Betätigungselement (200) und einen Befestigungssockel (204), der auf der Steuereinheit befestigt und dazu bestimmt ist, die Schalteinheit (50) aufzunehmen.

5. Vorrichtung nach Anspruch 4, **dadurch gekennzeichnet, dass** die Steuereinheit einen Körper (202) umfasst, in dem das Betätigungselement (200) in Translation angetrieben wird, und dass die Feder (205) einerseits am Körper (202) und andererseits am Betätigungselement (200) abgestützt positioniert ist.

6. Vorrichtung nach Anspruch 4 oder 5, **dadurch gekennzeichnet, dass** sie durch eine Öffnung, die in einer Wand vorgesehen ist, zusammengebaut wird, und dass die Steuereinheit und die Schalteinheit beiderseits der Wand zusammengebaut sind, wobei die Antenne (503) derart angeordnet ist, dass sie durch die von der Wand gebildete Ebene verläuft.

7. Vorrichtung nach Anspruch 2, **dadurch gekennzeichnet, dass** die Feder (305) im Inneren des Teils des Betätigungselements (300), der den Innenraum (301) bildet, angeordnet ist.

8. Vorrichtung nach Anspruch 7, **dadurch gekennzeichnet, dass** sie ein dichtes Gehäuse (302) umfasst, das das Betätigungselement (300) und die Schalteinheit (50) einschließt.

9. Vorrichtung nach Anspruch 7 oder 8, **dadurch gekennzeichnet, dass** die Feder (305) einerseits an der Schalteinheit (50) und andererseits am Betätigungselement (300) anliegt.

10. Vorrichtung nach Anspruch 2, **dadurch gekennzeichnet, dass** die Feder (405) außerhalb des Teils des Betätigungselements (400), der den Innenraum (401) bildet, angeordnet ist.

11. Vorrichtung nach Anspruch 11, **dadurch gekennzeichnet, dass** sie ein dichtes Gehäuse (402) umfasst, das das Betätigungselement (400) und die Schalteinheit (50) einschließt.

12. Vorrichtung nach Anspruch 11, **dadurch gekennzeichnet, dass** die Schalteinheit (50) in dem Gehäuse (402) angeordnet ist, um mit dem Gehäuse (402) in Bezug zum Betätigungselement (400) gleiten zu können.

13. Vorrichtung nach einem der Ansprüche 1 bis 12, **dadurch gekennzeichnet, dass** die Schalteinheit (50) ein Gehäuse (500) umfasst, das einen Stromgenerator (1) einschließt, der geeignet ist, mit dem Drücker (502) zusammenzuwirken, und der es ermöglicht, mechanische Energie, die vom Drücker geliefert wird, in elektrische Energie, die dazu bestimmt ist, das drahtlose Sendemodul zu versorgen, umzuwandeln.

14. Vorrichtung nach Anspruch 13, **dadurch gekennzeichnet, dass** der Stromgenerator (1) elektromagnetischen Typs ist und eine Magnetschaltung, die mit einem festen Teil und einem beweglichen Teil (10) versehen ist, und eine elektromagnetische Spule (11) umfasst, durch die die Magnetschaltung verläuft.

## Claims

1. Wireless switching device comprising:
- an actuating member (200, 300, 400) that can move along a main axis (A) between an idle position and a working position,
- a spring (205, 305, 405) stressed by force by the actuating member in a direction substantially parallel to the main axis,
- a switching assembly (50) comprising a housing (500), a plunger (502) arranged to be actuated by the actuating member (200, 300, 400) and a wireless transmitter module provided with an antenna (503) for sending a message to a receiver module in the event of an action on the plunger,
**characterized in that**:
- the housing includes a prominence (504) forming a recess,
- the antenna (503) is arranged inside the recess,
- the actuation member comprises a part forming a hollow axial internal space (201, 301, 401) inside which said prominence (504) housing the antenna (503) is housed.

2. Device according to Claim 1, **characterized in that** the spring (205, 305, 405) is arranged coaxially to the actuating member (200, 300, 400).

3. Device according to Claim 2, **characterized in that** the spring (205) is arranged outside the part of the actuating member (200) forming the internal space (201).

4. Device according to Claim 3, **characterized in that** it comprises a control assembly comprising the actuating member (200) and a fastening base (204) fixed to the control assembly and intended to accommodate the switching assembly (50).

5. Device according to Claim 4, **characterized in that** the control assembly comprises a body (202) in which the actuating member (200) is driven in translation and **in that** the spring (205) is positioned bearing on the one hand against the body (202) and on the other hand against the actuating member (200).

6. Device according to Claim 4 or 5, **characterized in that** it is assembled through an opening produced in a wall and **in that** the control assembly and the switching assembly are assembled on either side of the wall, the antenna (503) being arranged to pass through the plane formed by the wall.

7. Device according to Claim 2, **characterized in that** the spring (305) is arranged inside the part of the actuating member (300) forming the internal space (301).

8. Device according to Claim 7, **characterized in that** it comprises a sealed housing (302) enclosing the actuating member (300) and the switching assembly (50).

9. Device according to Claim 7 or 8, **characterized in that** the spring (305) bears on the one hand against the switching assembly (50) and on the other hand against the actuating member (300).

10. Device according to Claim 2, **characterized in that** the spring (405) is arranged outside the part of the actuating member (400) forming the internal space (401).

11. Device according to Claim 10, **characterized in that** it comprises a sealed housing (402) enclosing the actuating member (400) and the switching assembly (50).

12. Device according to Claim 11, **characterized in that** the switching assembly (50) is arranged in the housing (402) so as to be able to slide with the housing (402) relative to the actuating member (400).

13. Device according to one of Claims 1 to 12, **characterized in that** the switching assembly (50) comprises a housing (500) enclosing a generator (1) of electrical energy suitable for cooperating with the plunger (502) and used to convert a mechanical energy imparted by the plunger into an electrical energy intended to power the wireless transmitter module.

14. Device according to Claim 13, **characterized in that** the generator (1) of electrical energy is of electromagnetic type and comprises a magnetic circuit provided with a fixed part and a mobile part (10) and an electromagnetic coil (11) through which the magnetic circuit passes.
